# EUROPEAN PATENT APPLICATION

(11) **EP 1 881 616 A1**
(43) Date of publication of application: **23.01.2008**
(21) Application number: 06405309.3
(22) Date of filing: 17.07.2006
(51) Int. Cl.: H04B 7/005

(54) **Communication device and method of limiting quantity of data and power transmitted by a communication device**

(71) Applicant: ABB Research Ltd, 8050 Zürich (CH)
(72) Inventor: Kirrmann, Hubert, 5405 Dättwil (CH)
(74) Representative: ABB Patent Attorneys

(57) **Abstract**

A communication device (1) is provided with a power-limiting module (11) connected to the power supply (12) and configured to limit energy supplied to the transmitter portion (141) such that a defined maximum data transmission rate is not exceeded. The power-limiting module (11) comprises an energy storage device (111), supplying energy to the transmitter portion (141), and a limiter (112) limiting recharging of the energy storage device (111) by the power supply (12). The energy storage device (111) and the limiter (112) are selected such that a defined maximum energy is suppliable to the transmitter portion (141), limiting the transmitter portion (141) to transmit data at the maximum data transmission rate. Limiting the energy supplied to the transmitter portion (141) ensures that the communication device (1) does not transmit over the network more than a given, limited amount of information per time unit, thus, the quantity of data transmitted by the communication device (1) is limited.

## Description

### FIELD OF THE INVENTION

The present invention relates to a communication device and to a method of limiting the quantity of data transmitted by a communication device.

### BACKGROUND OF THE INVENTION

Data networks often fail because they are unable to forward data, for instance due to failures of links or switches. Typically, various redundancy schemes are implemented to deal with this type of loss of communication. Data networks also fail due to overload. Overload of data networks can be caused accidentally or maliciously. For example, to protect computers from overload, one limits the number of interrupt requests that a receiving computer is allowed to serve per time unit. However, a limitation of permissible interrupts merely protects one receiver. In another known method, one limits the number of messages that a sender (device or switch) may send or receive over a particular port. Limiting the number of permissible messages for switches has the disadvantage that the responsibility of limiting traffic is placed on the switch, without addressing directly the source of the trouble, which may be the device connected to the switch.

### DESCRIPTION OF THE INVENTION

It is therefore an objective of the present invention to provide a solution for reducing data network failures due to overload without the disadvantages of the prior art. Particularly, it is an objective of the present invention to provide, for reducing data network failures due to overload, a communication device and a method of limiting the quantity of data transmitted by a communication device.

These objectives are achieved by a communication device according to claim 1 and a method of limiting the data quantity transmitted by a communication device according to claim 8. Further preferred embodiments are evident from the dependent claims.

According to the present invention, the above-mentioned objects are particularly achieved in that a communication device, comprising a transceiver and an electrical power supply, further comprises a power-limiting module connected to the power supply and configured to limit the energy supplied to at least a transmitter portion of the transceiver such that a defined maximum data transmission rate is not exceeded by the transmitter portion. Due to the fact that sending one bit of information requires a certain amount of energy, limiting the energy supplied to the transmitter portion ensures that the communication device cannot, by design, transmit over a communication network or link more than a given, limited amount of information per time unit. Thus, by limiting the energy supplied to the transmitter portion of the communication device, the quantity of data transmitted by the communication device is limited. Contrary to solutions of the prior art, requiring control logics and possibly counters arranged external to the transceiver for deciding whether or not a transmission is permissible, limiting the energy supplied to the transceiver is a rather passive scheme involving only a few reliable elements and without the need for "intelligent" intervening control logics. Communication devices having their quantity of data transmission limited through limitation of their energy supply are particularly advantageous in safety-critical applications.

In an embodiment, the power-limiting module is interconnected between the power supply and the transmitter portion. The power-limiting module comprises an energy storage device, supplying energy to the transmitter portion, and a limiter, limiting recharging of the energy storage device by the power supply. The energy storage device and the limiter are selected such that the amount of energy available to the transmitter portion is high enough to sustain a defined maximum data transmission rate, e.g. a transmission pattern of 100 frames of 1500 bytes per second, requiring typically a power of 1W during distinct blocks of 1ms for Ethernet Drivers, but insufficient to sustain a higher data transmission rate that would cause network traffic that could possibly overload the network. For example, the energy storage device is a capacitor and the limiter is a resistor, the capacitor and the resistor being selected such that energy suppliable to the transmitter portion is limited to a defined maximum energy amount, limiting the transmitter portion to transmit data up to the maximum data transmission rate. As the energy storage device is recharged, a burst of communication may occur at a later time, however, this burst is again limited by the energy accumulated in the energy storage device, enforcing a pause before sending can be resumed.

In a further embodiment, the communication device further comprises a network controller, e.g. an Ethernet controller, configured to generate a signal indicative of insufficient power available at the transmitter portion for data transmission. For example, the communication device further comprises a processor configured to, responsive to said signal, adjust the data transmission rate or reboot the communication device. Although, the processor may be unable to throttle the data flow, e.g. because the controller of the transceiver is defective, limiting the energy supply to the transceiver ensures, at least, that the excess data flow does not affect the network and/or other devices on the network.

In yet another embodiment, the communication device further comprises a voltage regulator interconnected between the energy storage device and the transmitter portion. The voltage controller is configured to supply an operational voltage to the transmitter portion when a recharging voltage at the energy storage device reaches an upper threshold value after depletion below a lower threshold value (backlash scheme). The voltage regulator thus provides a measure for coping with the varying voltage level of the energy storage device. At least while the voltage at the energy storage device remains above the lower threshold value, the voltage regulator provides an evenly regulated operational voltage to the transceiver. When the voltage drops below the lower threshold, the regulator ceases to function and only resumes operation when the higher threshold is reached, ensuring that at least one complete frame can be sent in the worst case.

In an embodiment, the receiver portion of the transceiver is connected directly to a power supply, shared with or separate from the transmitter portion, without an energy limit imposed by the power-limiting module. Consequently, while the transceiver's transmitter portion is blocked from sending, the communication device is still able to receive.

In addition to the communication device, the present invention also relates to a method of limiting the quantity of data transmitted by a communication device, wherein, by a power-limiting module connected to a power supply of the communication device, limited is energy supplied to a transmitter portion of the communication device such that a defined maximum data transmission rate is not exceeded by the transmitter portion.

### BRIEF DESCRIPTION OF THE DRAWINGS

The present invention will be explained in more detail, by way of example, with reference to the drawings in which:
Fig. 1 shows a communication device with a power-limiting module for limiting the energy supplied to the transceiver,
Fig. 2 shows another embodiment of the communication device.

### DETAILED DESCRIPTION OF PREFERRED EMBODIMENTS

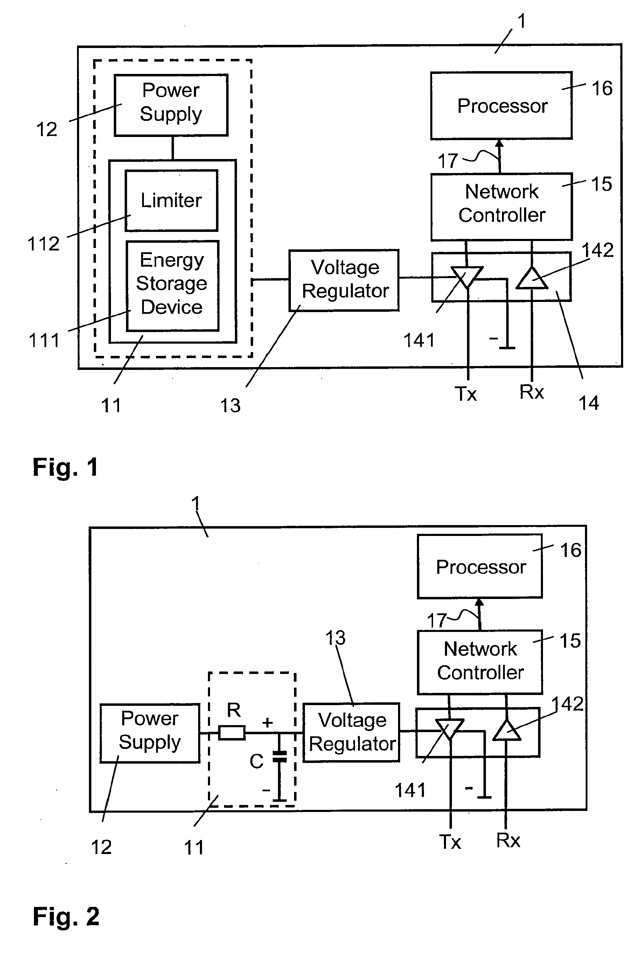

Fig. 1 and Fig 2. show block diagrams illustrating schematically a communication device 1 comprising a power supply 12, a network controller 15, a processor 16, and a transceiver 14 having a transmitter portion 141 (i.e. a transmitter transmitting a transmission signal Tx) and a receiver portion 142 (i.e. a receiver receiving a reception signal Rx). The transceiver 14 is an electrical, optical, or electromagnetic transceiver, for example. As is illustrated in Fig. 1 and Fig. 2, the communication device 1 further comprises a power-limiting module 11 connected to the power supply 12. The power-limiting module 11 is connected to the transceiver 14 for supplying a limited amount of energy to the transceiver 14. Preferably, the power-limiting module 11 is connected only to the transmitter portion 141 and the receiver portion 142 is connected directly to the power supply 12 (bypassing the power-limiting module 11) or has its own power supply.

As is illustrated in Fig. 1, the power-limiting module 11 comprises an energy storage device 111 and a limiter 112. For charging, the energy storage device 111 is connected to the power supply 12. The limiter 112 determines the rate (charging time) at which the energy storage device 111 is charged by the power supply 12. In the embodiment illustrated in Fig. 2, the energy storage device 111 is a capacitor C and the limiter 112 is a resistor R. In this embodiment, the capacitor C supplies energy to the transceiver 14 or the transmitter portion 141, respectively, and the capacitor C is recharged slowly by the power supply through the resistor R. One skilled in the art will understand that alternative components can be used to implement limiter 112 and energy storage device 111, for instance an active current limiter. Energy storage device 111, e.g. capacitor C, and limiter 112, e.g. resistor R, are selected/configured such that the energy amount that can be supplied to the transmitter portion 141 is limited to a defined maximum energy that limits the transmitter portion 141 to transmitting data up to a defined maximum data transmission rate.

Optionally, a voltage regulator 13 is interconnected between the power-limiting module 11 and the transceiver 14 or the transmitter portion 141, respectively. The voltage regulator 13 is implemented as a hardware circuit and configured to regulate the varying voltage provided at the energy storage device 111, e.g. the capacitor C, to an operational voltage for the transceiver 14 or transmitter portion 141, respectively. For example, the voltage regulator 13 is configured to regulate the varying voltage to the operational voltage while the varying voltage has not been decreased below a defined lower threshold value. Preferably, once the energy storage device 111 has been depleted and the varying voltage has decreased below the lower threshold value, the voltage regulator 13 is configured to require the varying voltage to increase by a defined value Δ to an upper threshold value, before the varying voltage is regulated again to the operational voltage. For example, to limit the maximum transmission rate to 10 frames of 1500 bytes per second, requiring a power of 1W during distinct blocks of 1.5 ms for Ethernet drivers, a resistor R of 100 Ohm and a capacitor C of 1000 microfarads are selected, assuming that the primary voltage is 10,0 V and the supply voltage required by the regulator to start operating is 7.5 V, and the regulator ceases feeding the transmitter when its supply voltage drops below 5,0 V.

Preferably, the network controller 15, e.g. an Ethernet controller, is configured to detect that the transmitter portion 141 is not able to transmit due to the lack of sufficient power. Furthermore, the network controller 14 is configured to generate a signal 17 that indicates to the processor 16 that, for data transmission, there is insufficient power available at the transmitter portion 141. The processor 16 is configured, e.g. by means of a programmed software module, to respond to signal 17 by adjusting, e.g. reducing and/or delaying, data transmission activities, or by rebooting the network controller 15, for example.

## Claims

1. A communication device (1) comprising a transceiver (14) and an electrical power supply (12), wherein the device further comprises:
a power-limiting module (11) connected to the power supply (12) and configured to limit energy supplied to at least a transmitter portion (141) of the transceiver (14) such that a defined maximum data transmission rate is not exceeded by the transmitter portion (141).

2. The communication device (1) of claim 1, wherein the power-limiting module (11) is interconnected between the power supply (12) and the transmitter portion (141); and wherein the power-limiting module (11) comprises an energy storage device (111) supplying energy to the transmitter portion (141), and a limiter (112) limiting recharging of the energy storage device (111) by the power supply (12).

3. The communication device (1) of claim 2, wherein the energy storage device (111) is a capacitor (C) and wherein the limiter is a resistor (R), the capacitor (C) and the resistor (R) being selected such that energy suppliable to the transmitter portion (141) is limited to a defined maximum energy amount, limiting the transmitter portion (141) to transmit data at the maximum data transmission rate.

4. The communication device (1) of one of the claims 1 to 3, further comprising a network controller (15) configured to generate a signal (17) indicative of insufficient power available at the transmitter portion (141) for data transmission.

5. The communication device (1) of claim 4, further comprising a processor (16) configured to, responsive to said signal (17), perform one of adjusting the data transmission rate and rebooting the communication device (1).

6. The communication device (1) of one of the claims 1 to 5, further comprising a voltage regulator (13) interconnected between the energy storage device (111) and the transmitter portion (141), and configured to supply an operational voltage to the transmitter portion (141) when a recharging voltage at the energy storage device (111) reaches an upper threshold value after depletion below a lower threshold value.

7. The communication device (1) of one of the claims 1 to 6, wherein a receiver portion (142) of the transceiver (14) is connected directly to a power supply (12) without an energy limit imposed by the power-limiting module (11).

8. A method of limiting quantity of data transmitted by a communication device (1), the method comprising:
by a power-limiting module (11), connected to a power supply (12) of the communication device (1), limiting energy supplied to a transmitter portion (141) of the communication device (1) such that a defined maximum data transmission rate is not exceeded by the transmitter portion (141).

9. The method of claim 8, wherein the energy is supplied to the transmitter portion (141) by an energy storage device (111), and wherein a limiter (112) limits recharging of the energy storage device (111) by the power supply (12), the energy storage device (111) and the limiter (112) being selected such that energy suppliable to the transmitter portion (141) is limited to a defined maximum energy amount, limiting the transmitter portion (141) to transmit data at the maximum data transmission rate.

10. The method of one of the claims 8 or 9, further comprising, by a network controller (15), generating a signal (17) indicative of insufficient power available at the transmitter portion (141) for data transmission.
